# DEMANDE DE BREVET EUROPEEN

(11) **EP 1 370 055 A1**
(43) Date de publication de la demande: **10.12.2003**
(21) Numéro de dépôt: 03291356.8
(22) Date de dépôt: 06.06.2003
(51) Int. Cl.: H04M 3/436

(54) **Dispositif et procédé de télécommunication**

(30) Priorité: 07.06.2002 FR 0207013
(71) Demandeur: France Telecom, F-71015 Paris (FR)
(72) Inventeur: Clerc, Fabrice, 14550 Blainville-sur-Orne (FR)
(74) Mandataire: Texier, Christian

(57) **Abrégé**

La présente invention concerne un système de télécommunication comprenant un ensemble (12) formant base de données aptes à délivrer sur demande d'un utilisateur (20a) une adresse provisoire et à associer cette adresse provisoire à au moins une condition d'appel définie par l'utilisateur précité (20a) et des moyens de contrôle (14) aptes à autoriser une communication entre ledit utilisateur (20a) et un tiers (20t) lorsque ce dernier sollicite ladite adresse provisoire dans lesdites conditions d'appel définies par l'utilisateur (20a).

## Description

La présente invention concerne le domaine des télécommunications.

Plus précisément, l'objet de la présente invention est lié au domaine des services de téléphonie avancée proposés aux abonnés, et notamment à la gestion des numéros confidentiels, ainsi qu'à la sécurité des services.

L'invention s'adresse plus particulièrement à des abonnés qui souhaitent pouvoir être contactés de manière ponctuelle et temporaire par des correspondants identifiés, tout en conservant secret leur numéro d'appel permanent.

Ce besoin de confidentialité peut correspondre en particulier au souhait de ne pas communiquer son numéro d'appel personnel, ou bien celui d'un tiers en cas de déplacement. La nécessité d'être joignable peut être liée à l'exercice de certaines fonctions ou responsabilités, impliquant des astreintes téléphoniques, dans des plages horaires prédéfinies, selon des conditions prédéterminées, éventuellement même selon que la personne appelante sera ou non habilitée à le faire, en dehors desquelles les personnes concernées souhaitent être certaines de ne pas être importunées.

De nombreuses solutions ont déjà été proposées pour tenter de résoudre le problème ainsi posé, ou à tout le moins des problèmes très similaires.

Une solution classique pour les personnes ne souhaitant pas divulguer leur numéro de téléphone personnel, afin de ne pas risquer d'être importunées, consiste à se faire inscrire sur une liste spéciale confidentielle dénommée en France "liste rouge".

Toutefois, une solution de ce genre est incompatible avec une nécessité d'astreinte régulière et répétitive, car elle implique de devoir révéler ce numéro à toute personne susceptible d'appeler en cas de nécessité : il est impossible d'exiger de ladite personne qu'elle oublie le numéro en dehors des heures de services, ni de vérifier que le numéro n'a pas été divulgué à des tiers.

Le recours à une enveloppe scellée peut permettre, provisoirement, de concilier inscription sur liste spéciale dite rouge, et nécessité d'être joignable de manière très exceptionnelle (plan ORSEC, plan rouge, ...). Toutefois, si l'événement se produit, on est ramené au cas précédent : une fois l'enveloppe ouverte et le numéro révélé, rien ne garantit sa confidentialité ultérieure.

Une solution également classique pour répondre au problème du déplacement chez un tiers consiste soit à effectuer un transfert d'appel, soit à emporter un téléphone mobile. Cela implique toutefois de communiquer, dans le premier cas son numéro personnel (cela évite de révéler celui de ses hôtes), dans le second son numéro de mobile. Dans ces deux cas, la problématique est identique à celle décrite précédemment : rien n'assure à l'utilisateur la confidentialité de ces numéros, postérieurement à la période au cours de laquelle il a obligation d'être joignable.

Une alternative envisageable, et parfois appliquée, aux solutions décrites ci-dessus, consiste à communiquer son numéro, puis à filtrer les appels via un répondeur ou une messagerie. Toutefois, cette solution présente au moins un inconvénient : la personne qui a obligation d'être joignable doit mettre hors service ce système de filtrage pendant les périodes d'astreinte, ce qui ne la protège plus des appels de la part de personnes non autorisées (appels malveillants la nuit, par exemple). On se ramène dans ce cas à la problématique précédente.

Le document US 5668862 décrit un système de filtrage d'appels entrants, positionné chez l'utilisateur abonné, destinataire des appels, et qui filtre lesdits appels selon le N° qui a été composé par l'appelant, permettant de classer l'appelant dans une catégorie, et de traiter son appel en fonction. C'est l'appelé qui communique le N° adéquat à ses interlocuteurs (par exemple un n° xx xx xx xx pour ses connaissances privées, yy yy yy yy pour ses relations d'affaires, etc ... Ces N° sont attribués de manière statique.

L'art antérieur peut également être représenté par un projet dénommé "MANDARINE" proposé par FRANCE TELECOM, qui a pour objet d'assurer une continuité fixe-mobile, en redirigeant automatiquement un appel émis vers un N° fixe de l'abonné, sur le N° de mobile de ce dernier, en cas d'absence du domicile.

Ce projet, mis à part le fait qu'il offre un service de redirection d'appel, ne résout cependant pas les problèmes auxquels vise à répondre le service, objet de la présente invention. En particulier, il ne protège en aucun cas des appels malveillants, puisqu'il suppose que le N° fixe de l'abonné n'est pas confidentiel.

On peut citer également en tant qu'art antérieur un autre service proposé par FRANCE TELECOM sous la dénomination "PRIMO".

Ce service a pour objet d'attribuer un N° d'appel virtuel à une personne abonnée. Ce N° permet de rediriger les appels sur un téléphone fixe ou bien sur un téléphone mobile de son choix. La gestion d'un répertoire de N° privilégiés permet de faciliter l'orientation des appels.

Ce service présente un réel intérêt. Néanmoins, il ne donne pas toujours totalement satisfaction. En particulier là encore ce service ne permet pas d'assurer la confidentialité et la tranquilité de l'utilisateur après échéance d'une période d'astreinte.

Dans ce contexte, la présente invention a pour but de proposer de nouveaux moyens de télécommunication, permettant de garantir une communication entre un utilisateur appelé devant être joignable, par exemple dans des plages horaires prédéterminées, et un utilisateur appelant dûment autorisé, tout en assurant que ledit utilisateur appelé ne puisse être importuné par un utilisateur appelant non autorisé.

Ce but est atteint dans le cadre de la présente invention, grâce à un système de télécommunication comprenant un ensemble formant bases de données aptes à délivrer sur demande d'un utilisateur une adresse, par exemple un numéro de téléphone ou une adresse e-mail, provisoire et à associer à cette adresse provisoire au moins une condition d'appel définie par l'utilisateur précité, et des moyens de contrôle aptes à autoriser une communication entre ledit utilisateur et un tiers lorsque ce dernier sollicite la dite adresse provisoire dans lesdites conditions d'appel défini par l'utilisateur.

La présente invention concerne également l'ensemble formant base de données précité, les moyens de contrôle précités et un procédé pour la mise en oeuvre de ce système.

D'autres caractéristiques, buts et avantages de la présente invention apparaîtront à la lecture de la description détaillée qui va suivre, et en regard des dessins annexés, donnés à titre d'exemples non limitatifs et sur lesquels :
- la figure 1 représente schématiquement l'architecture générale d'un système de télécommunication conforme à la présente invention,
- la figure 2 représente schématiquement un processus d'abonnement d'un utilisateur, conforme à la présente invention,
- la figure 3 représente schématiquement un processus spécifique d'activation mis en oeuvre par cet utilisateur dans le cadre de la présente invention, et
- la figure 4 représente schématiquement le fonctionnement du système conforme à la présente invention.

Le descriptif qui suite se rapporte à l'application préférentielle de la présente invention concernant la téléphonie, c'est-à-dire un système de communication établi en vue de la transmission de la parole.

Cependant, l'invention n'est pas limitée à cette application particulière et englobe d'une manière générale tout système de télécommunication visant à mettre en relation au moins deux entités pour leur permettre d'échanger des informations, quelles que soient la forme et la nature de celles-ci, notamment par exemple sous forme de signaux numériques représentatifs de textes et/ou images.

De ce fait, le concept de "numéro de téléphone provisoire" mentionné par la suite ne doit pas être appréhendé dans un sens restrictif et peut englober d'une manière générale toute "adresse provisoire".

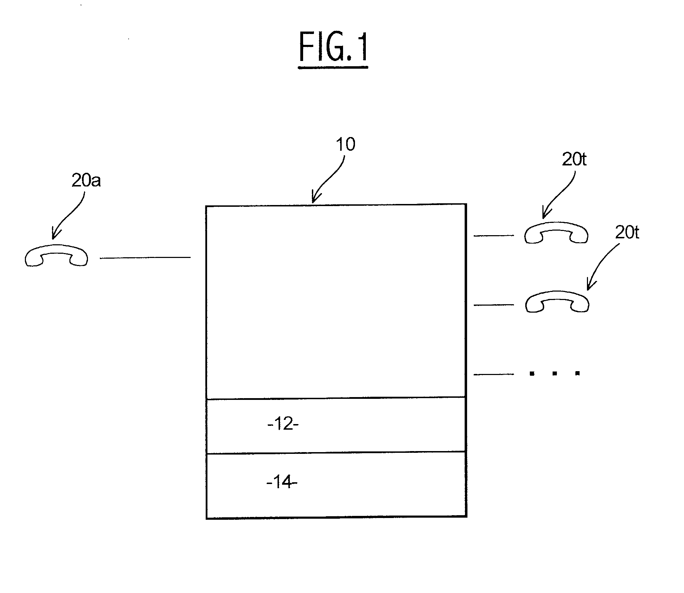

On aperçoit sur la figure 1 annexée un système de télécommunication conforme à la présente invention.

Ce système comprend essentiellement des moyens 10 de télécommunication classique, par exemple de téléphonie, fixe ou mobile, aptes à mettre en liaison différents utilisateurs 20.

Sur la figure 1, on a référencé schématiquement 20a, un utilisateur susceptible d'être appelé et 20t des utilisateurs tiers susceptibles d'être appelants.

Les moyens de télécommunication 10 pouvant prendre toute forme approprié connue de l'homme de l'art, ces moyens ne seront pas décrits dans le détail par la suite.

Le système 10 conforme à la présente invention comprend notamment un ensemble formant base de données 12 apte à délivrer sur demande d'un utilisateur 20a une adresse provisoire, par exemple un numéro de téléphone provisoire et à associer à cette adresse provisoire au moins une condition d'appel définie par l'utilisateur précité 20a.

Le système 10 conforme à la présente invention comprend en outre des moyens 14 de contrôle aptes à autoriser une communication entre l'utilisateur 20a et un tiers 20t lorsque ce dernier sollicite ladite adresse provisoire attribuée à l'utilisateur 20a, dans les conditions d'appel définies par ce dernier.

La base de données 12 et/ou le système de contrôle 14 peuvent être hébergés en tout lieu approprié. Ils peuvent être liés directement au système de la télécommunication 10 ou encore être hébergés chez un tiers de confiance.

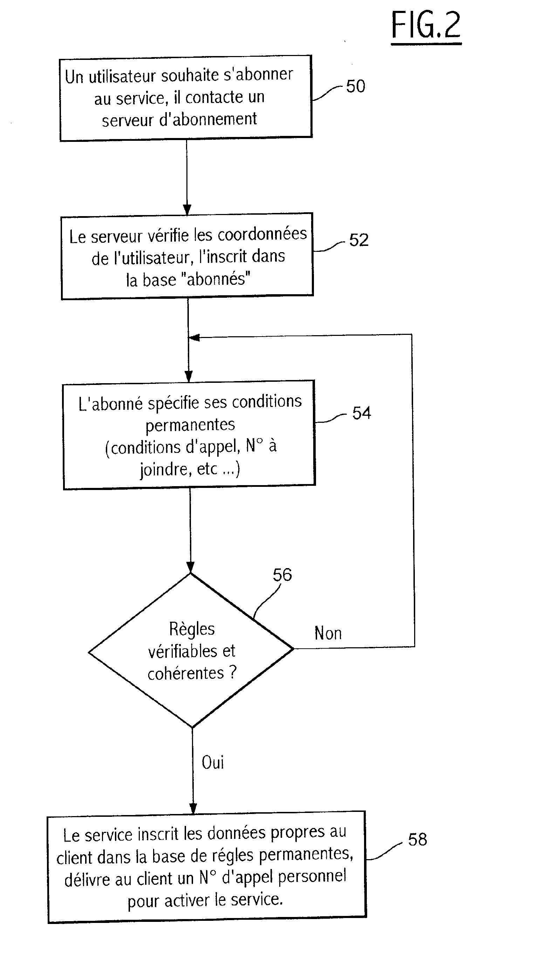

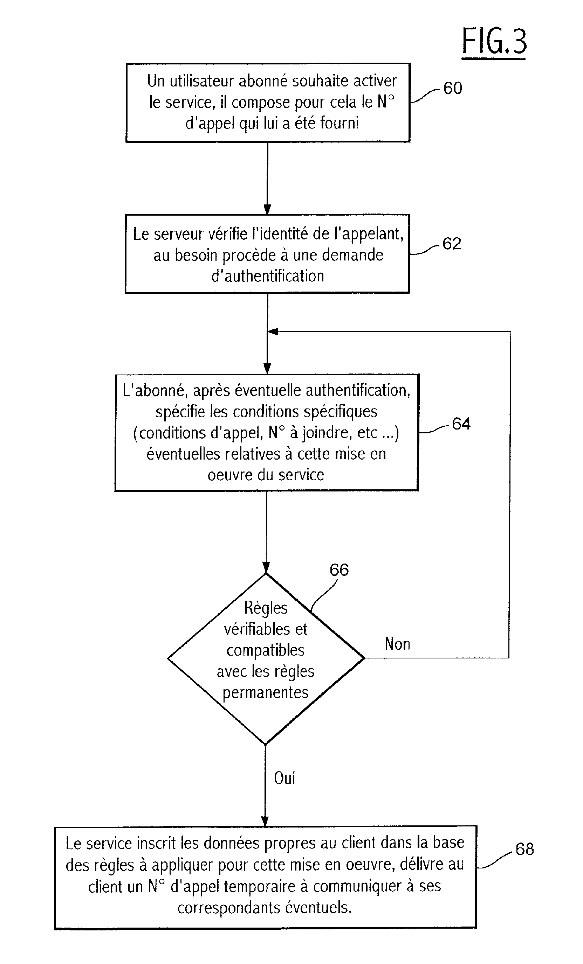

De préférence, dans le cadre de la présente invention, le processus de délivrance de l'adresse provisoire et d'enregistrement des conditions d'appel spécifiques liés à celle-ci se décompose en deux étapes : une étape d'abonnement d'une part, puis une étape d'activation d'autre part, schématisées respectivement sur les figures 2 et 3 annexées.

On va maintenant décrire le processus d'abonnement d'un utilisateur 20a schématisé sur la figure 2.

On a schématisé sur la figure 2, une première étape 50 par laquelle un utilisateur 20a qui souhaite utiliser le service, et donc s'abonner à celui-ci, contacte une entité d'abonnement, par un exemple un serveur d'abonnement. Pour cela, typiquement, l'utilisateur 20a souscrit un abonnement en indiquant son identité, son numéro de téléphone permanent, qui doit rester confidentiel (le cas échéant plusieurs numéros, dont un numéro de téléphone mobile par exemple). L'étape 52 représentée sur la figure 2 illustre une étape de vérification des coordonnées de l'utilisateur, par le serveur, et une étape d'inscription de cet utilisateur reconnu dans une base "abonnés".

Le cas échéant, l'utilisateur 20a peut indiquer dès le processus d'abonnement des conditions par défaut qui doivent être satisfaites pour qu'un interlocuteur 20t disposant des qualités et droit nécessaires soit en mesure de le joindre.

A cet effet, on a illustré sur la figure 2, une étape 54 au cours de laquelle un abonné 20a spécifie ses conditions permanentes, par exemple des conditions d'appels telles que date et heure de début d'appels autorisés, date et heure de fin d'appels autorisés, numéro appelant autorisé, etc ..., ainsi qu'un numéro à joindre.

De préférence, le processus d'abonnement comprend ensuite une étape 56 au cours de laquelle, le serveur d'abonnement vérifie si les conditions précisées à l'étape 54 correspondent à des règles vérifiables et cohérentes. Dans la négative, le serveur d'abonnement invite l'utilisateur 20a à préciser ses conditions à l'étape 54.

Au contraire dans l'affirmative, à l'étape 58, le service inscrit dans la base de données 12, les données propres au client 20a et délivre de préférence à celui-ci un numéro d'appel personnel pour activer le service.

On va maintenant décrire le processus d'activation ou mise en oeuvre du service par un utilisateur 20a en regard de la figure 3.

A l'étape 60, un utilisateur abonné 20a qui souhaite activer le service entre en contact avec celui-ci en composant le numéro d'appel approprié, soit par exemple le numéro d'appel téléphonique qui lui a été fourni à l'étape 58.

Le cas échéant, à l'étape 62, le service vérifie l'identité de l'appelant 20a, au besoin procède à une demande d'authentification.

A l'étape 64, l'abonné 20a, après éventuelle authentification, spécifie les conditions spécifiques (conditions d'appel, numéro à joindre, etc...) éventuelles relatives à cette mise en oeuvre du service. Au cours de cette étape, si cela n'a pas été opéré auparavant, l'abonné 20a doit notamment indiqué le numéro permanent auquel il peut être joint (numéro fixe, numéro mobile, numéro d'un tiers -"transfert d'appels"-, voire une combinaison de tout cela en fonction du temps).

Il convient de préciser, là encore, que le N° d'appel du service est à prendre au sens large, et qu'il pourra avantageusement s'agir d'une adresse internet, permettant notamment à l'utilisateur 20a de paramétrer ses conditions d'appel en remplissant un formulaire spécifique, envoyé électroniquement au service.

Si cela n'a été fait auparavant, il doit également préciser au cours de cette étape 64 de préférence des plages horaires dans lesquelles il souhaite pouvoir être joint, le cas échéant plusieurs plages horaires associées respectivement à des numéros d'appels différents.

Toujours à l'occasion de cette étape 64, si cela n'a pas été opérée auparavant, l'utilisateur 20a doit préciser sous quelle condition il souhaite être joignable (par exemple, mais bien entendu non limitativement, plan rouge, plan ORSEC, ...).

Les conditions précisées à l'étape 64 peuvent compléter ou remplacer d'éventuelles conditions permanentes indiquées lors de l'étape 54 au moment de la souscription au service.

A l'occasion de l'étape 64, l'utilisateur 20a peut également préciser de quelle prérogative un utilisateur appelant 20t devra disposer pour pouvoir le contacter.

Il convient de noter qu'en fonction du niveau de sécurité souhaité et des moyens dont dispose l'utilisateur 20a ou 20t, il pourra être demandé à cet utilisateur de signer les éléments constitutifs de sa demande, et en particulier les consignes données au service.

A l'étape 66, le service examine si l'ensemble des règles ainsi spécifiées sont vérifiables et compatibles avec les règles permanentes précisées à l'étape 54.

Dans la négative, l'abonné 20a est invité à l'étape 64 à préciser les conditions.

Au contraire, dans l'affirmative, le service inscrit à l'étape 68 pour les données propres au client 20a dans la base 12, des règles à appliquer pour cette mise en oeuvre et délivre au client 20a une adresse provisoire à communiquer à ses correspondants éventuels.

Bien entendu, en variante, dans le cadre de la présente invention, les processus d'abonnement schématisés sur la figure 2 et d'activation schématisés sur la figure 3 peuvent être regroupés dans un processus unique auquel cas l'ensemble des conditions spécifiés séparément aux étapes 54 et 64 selon le descriptif précité, serait défini simultanément.

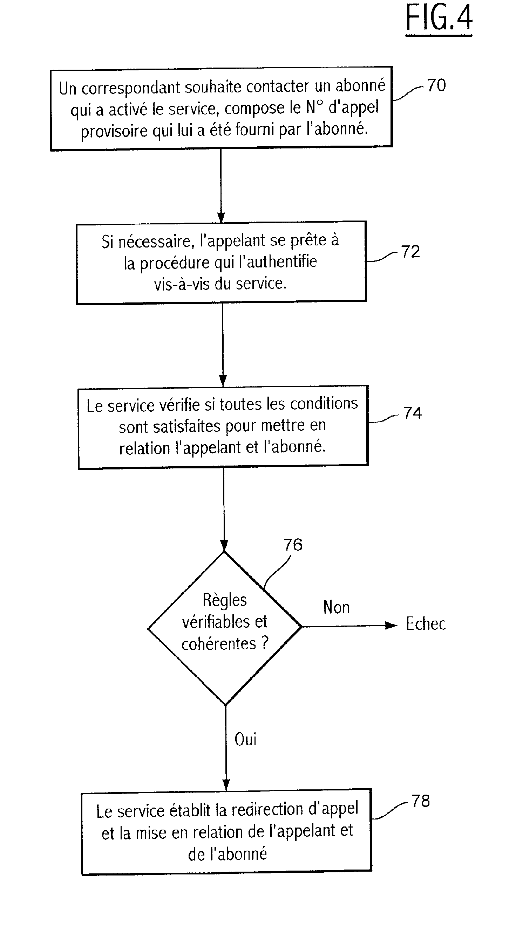

Le fonctionnement du service et la mise en communication d'un utilisateur 20a et d'un tiers 20t sont alors opérés préférentiellement comme schématisé sur la figure 4.

La première étape 70 schématise l'activation du service par un tiers 20t souhaitant contacter un abonné 20a, par composition du numéro d'appel provisoire fourni à ce dernier à l'étape 68, lequel numéro d'appel provisoire a bien entendu à cet effet été communiqué préalablement et confidentiellement par l'abonné 20a au tiers 20t impliqué.

Le cas échéant à l'étape 72, le service procède à une étape d'authentification de l'appelant 20t.

Puis il vérifie à l'étape 74, que toutes les conditions définies préalablement aux étapes 54 et 64 sont satisfaites pour mettre en relation l'appelant 20t et l'abonné 20a.

A l'étape 76, le service contrôle ainsi si l'ensemble des règles impliquées sont vérifiées et cohérentes. Dans la négative, la mise en communication n'est pas réalisée.

Au contraire dans l'affirmative, à l'étape 78 le service établit la redirection d'appels et la mise en relation de l'appelant 20t et de l'abonné 20a.

On notera que le processus préconisé dans le cadre de la présente invention permet à un tiers 20t d'entrer en contact avec un abonné 20a sans qu'à aucun moment, il ne puisse prendre connaissance du numéro permanent de ce dernier. Ainsi, il ne pourra le contacter directement ultérieurement. Il ne pourra non plus le recontacter indirectement si les conditions d'appels ne sont plus satisfaites.

Par rapport aux propositions de l'art antérieur connu, les moyens préconisés dans le cadre de la présente invention offrent de nombreux avantages.

Pour les utilisateurs appelés 20a, la présente invention propose des moyens simples de délivrance d'un numéro d'appel provisoire auquel ils peuvent être joints de manière ponctuelle et selon les conditions prédéterminées. La présente invention offre la certitude d'être joint, au moyen de ce numéro provisoire, uniquement par des personnes dûment habilitées à le faire.

Pour les organisations dont dépendent les personnes sus nommées, la présente invention permet de s'affranchir de la nécessité de gérer la conservation confidentielle de numéro d'appels de ses administrés, (salariés, autorité compétente ...).

Pour les personnes appelantes autorisées, la présente invention offre la certitude de pouvoir joindre leurs interlocuteurs en cas de besoin (en particulier la présente invention n'exige pas d'enveloppe scellée vide ni de numéro erroné, ni de répondeur branché en permanence, ...).

Pour un opérateur de télécommunication, la présente invention offre la possibilité de se démarquer de la concurrence par la certitude d'offrir un véritable service innovant à valeur ajoutée. En outre, la présente invention offre la perspective de générer des revenus liés à l'utilisation du service (abonnement, et/ou paiement à l'usage, et/ou génération de communications supplémentaires).

Bien entendu la présente invention n'est pas limitée aux modes de réalisation particuliers qui viennent d'être décrits mais s'étend à toute variante conforme à son esprit.

Selon une autre caractéristique avantageuse de la présente invention, le procédé comprend une étape de fourniture à l'utilisateur d'un schéma de présentation des conditions d'appel, par exemple sous forme d'un formulaire web.

Par rapport à l'art antérieur, notamment le document US 5668862, l'invention se distingue en particulier par les avantages suivants.

Le système selon l'invention est défini du point de vue de l'appelant. L'invention permet de réaliser un système automatique "d'enveloppe parachute" (on sait où trouver l'enveloppe associée à la personne à joindre, mais on ne sait pas comment joindre cette personne: les informations nécessaires sont dans l'enveloppe), permettant de joindre par exemple une autorité d'astreinte. De ce point de vue, il n'y a pas de distribution de N° à des appelants prédéterminés et le filtrage se fait tout autant du point de vue de l'appelé que de celui de l'appelant : les contrôles portent sur le fait que l'appelant a le droit d'appeler tout autant que sur le fait que l'appelé est joignable.

En outre, l'invention présente l'avantage incontestable de pouvoir réassocier dynamiquement le N° à composer à celui de l'utilisateur à joindre à un instant t : cela permet d'une part de gérer des changements d'astreintes / tours de gardes, ..., sans changer l'enveloppe parachute ; d'autre part de ne pas forcément révéler l'identité de la personne appelée.

## Revendications

1. Système de télécommunication comprenant un ensemble (12) formant base de données aptes à délivrer sur demande d'un utilisateur (20a) une adresse provisoire et à associer cette adresse provisoire à au moins une condition d'appel définie par l'utilisateur précité (20a) et des moyens de contrôle (14) aptes à autoriser une communication entre ledit utilisateur (20a) et un tiers (20t) lorsque ce dernier sollicite ladite adresse provisoire dans lesdites conditions d'appel définies par l'utilisateur (20a).

2. Système selon la revendication 1, **caractérisé par le fait qu'**il comprend des moyens de télécommunication par téléphonie.

3. Système selon l'une des revendications 1 ou 2, **caractérisé par le fait que** l'adresse provisoire constitue un numéro de téléphone provisoire.

4. Système selon l'une des revendications 1 à 3, **caractérisé par le fait que** la base de données (12) est adaptée pour mémoriser au moins une condition choisie dans le groupe comprenant une plage horaire de début d'appels autorisées, une plage horaire de fin d'appels autorisés, un ou plusieurs numéros appelants spécifiques.

5. Ensemble formant base de données pour la mise en oeuvre d'un système conforme à l'une des revendications 1 à 4, **caractérisé par le fait qu'**il comprend des moyens aptes à délivrer sur demande d'un utilisateur (20a) une adresse provisoire et à associer à cette adresse provisoire au moins une condition d'appel définie par l'utilisateur précité (20a).

6. Moyen de contrôle pour la mise en oeuvre du système conforme à l'une des revendications 1 à 4, **caractérisé par le fait qu'**il comprend des moyens aptes à autoriser une communication entre ledit utilisateur (20a) et un tiers (20t) lorsque ce dernier sollicite ladite adresse provisoire dans les conditions d'appels définies par l'utilisateur (20a).

7. Procédé de télécommunication pour la mise en oeuvre du système conforme à l'une des revendications 1 à 4, **caractérisé par le fait qu'**il comprend les étapes qui consistent à :
i) enregistrer des conditions d'appels vérifiables et cohérentes définies par l'utilisateur (20a),
ii) délivrer une adresse d'appels provisoires associée à ces conditions, à l'utilisateur (20a), et
iii) assurer la mise en communication de l'utilisateur (20a) avec un tiers (20t) quand ce dernier compose l'adresse provisoire dans des conditions compatibles avec celles enregistrées à l'étape i).

8. Procédé selon la revendication 7, **caractérisé par le fait que** l'étape i) se décompose en deux processus successifs respectivement d'abonnement et d'activation.

9. Procédé selon la revendication 8, **caractérisé par le fait que** l'utilisateur (20a) est invité à définir des règles permanentes d'appels au cours du processus d'abonnement.

10. Procédé selon la revendication 9, **caractérisé par le fait que** l'utilisateur (20a) est invité à définir des règles provisoires complémentaires et/ou alternatives, mais compatibles, avec les règles permanentes.

11. Procédé selon l'une des revendications 7 à 10, **caractérisé par le fait qu'**il comprend une étape de fourniture à l'utilisateur d'un schéma de présentation des conditions d'appel, par exemple sous forme d'un formulaire web.

12. Procédé selon l'une des revendications 7 à 11, **caractérisé par le fait qu'**il comprend l'étape de délivrance d'un numéro d'appel spécifique pour l'activation du service à l'issue de l'étape i) d'enregistrement des conditions d'appels vérifiables et cohérentes définies par l'utilisateur (20a).

13. Procédé selon l'une des revendications 7 à 12, **caractérisé par le fait qu'**il comprend une étape d'identification de l'utilisateur (20a) et/ou d'un tiers appelant (20t).

14. Procédé selon l'une des revendications 7 à 13, **caractérisé par le fait qu'**il comprend une étape de requête de signature à un utilisateur (20a) des conditions d'appels définies par celui-ci.
